(19) Europäisches Patentamt
European Patent Office
Office européen des brevets

(11) **EP 3 871 052 B1**

(12) **EUROPÄISCHE PATENTSCHRIFT**

(45) Veröffentlichungstag und Bekanntmachung des Hinweises auf die Patenterteilung:
**07.02.2024 Patentblatt 2024/06**

(21) Anmeldenummer: **19823889.1**

(22) Anmeldetag: **09.12.2019**

(51) Internationale Patentklassifikation (IPC):
**G05B 1/03** (2006.01)    **G05B 19/401** (2006.01)

(52) Gemeinsame Patentklassifikation (CPC):
**G05B 1/03; G05B 19/401**

(86) Internationale Anmeldenummer:
**PCT/AT2019/060422**

(87) Internationale Veröffentlichungsnummer:
**WO 2020/118330 (18.06.2020 Gazette 2020/25)**

(54) **VERFAHREN ZUR KALIBIRIERUNG EINES TECHNISCHEN SYSTEMS**

METHOD FOR CALIBRATING A TECHNICAL SYSTEM

PROCÉDÉ D'ÉTALONNAGE D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2018 AT 510952018**

(43) Veröffentlichungstag der Anmeldung:
**01.09.2021 Patentblatt 2021/35**

(73) Patentinhaber: **AVL List GmbH**
**8020 Graz (AT)**

(72) Erfinder:
• **DIDCOCK, Nico**
**8020 Graz (AT)**
• **WASSERBURGER, Alexander**
**1120 Wien (AT)**
• **HAMETNER, Christoph**
**1020 Wien (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 1 703 110      WO-A1-2016/146528**

**AT-A1- 518 676      DE-A1-102015 207 252**

• **Heiko Sequenz: "Emission Modelling and Model-Based Optimisation of the Engine Control", Fachbereich Elektrotechnik und Informationstechnik der technischen Universität Darmstadt , 25. Februar 2013 (2013-02-25), XP055281312, Darmstadt, germany Gefunden im Internet: URL:http://tuprints.ulb.tu-darmstadt.de/39 48/1/Emission Modelling and Model-Based Optimisation of the Engine Control - Dissertation Heiko Sequenz.pdf [gefunden am 2016-06-16]**

• **Christoph Hametner ET AL: "Nonlinear System Identiication through Local Model Approaches: Partitioning Strategies and Parameter Estimation 179 0 Nonlinear System Identification through Local Model Approaches: Partitioning Strategies and Parameter Estimation", , 1. Januar 2010 (2010-01-01), XP055280761, Gefunden im Internet: URL:http://cdn.intechopen.com/pdfs-wm/1173 9.pdf [gefunden am 2016-06-15]**

• **Anonymous: "Kalibrierung - Wikipedia", , 11 April 2019 (2019-04-11), pages 1-3, XP055863225, Retrieved from the Internet: URL:http://web.archive.org/web/20190411152 359/https://de.wikipedia.org/wiki/Kalibrie rung [retrieved on 2021-11-18]**

**Beschreibung**

Die gegenständliche Erfindung betrifft ein Verfahren zur Kalibrierung eines technischen Systems, wobei bei der Kalibrierung die Werte einer Anzahl von Steuervariablen des technischen Systems, mit denen das technische System gesteuert oder eingestellt wird, in bestimmten Betriebspunkten des technischen Systems ermittelt werden und die Kalibrierung anhand eines Belastungszyklus für das technische System, der eine Abfolge einer Anzahl von Betriebspunkten des technischen Systems bewirkt, durchgeführt wird.

Es ist ein oftmaliges Problem, ein technisches System hinsichtlich eines bestimmten Verhaltens und in Abhängigkeit von einem bestimmten Betriebspunkt zu optimieren. Bei einer derartigen Optimierung werden in der Regel in einem bestimmten Betriebspunkt Steuervariablen des technischen Systems variiert und die Auswirkung auf das bestimmte Verhalten überprüft. Steuervariablen sind dabei Variablen, über die das technische System geregelt oder gesteuert oder eingestellt wird. Der Betriebspunkt kann durch Zustandsvariablen charakterisiert werden, die sich in Abhängigkeit der Steuervariablen, und eventuell in Abhängigkeit von aktuellen äußeren Einflüssen (wie z.B. eine Last, Umgebungsbedingungen (z.B. Umgebungstemperatur, Wind, Feuchtigkeit, Atmosphärendruck), usw.) einstellen. Die Auswirkung wird üblicherweise anhand von zumindest einer Ausgangsgröße des technischen Systems überprüft, die gemessen werden kann oder anhand von Modellen berechnet werden kann. Die Steuervariablen, die das beste Verhalten liefern, was nach einem festgelegten Kriterium überprüft wird, werden für diesen Betriebspunkt gespeichert oder das technische System damit eingestellt, um im normalen Betrieb das technische System damit zu betreiben. Das kann für verschiedene Betriebspunkte wiederholt werden, um die optimalen Steuervariablen über einen bestimmten Betriebsbereich des technischen Systems, vorzugsweise den gesamten Betriebsbereich, zu erhalten. In welchen Betriebspunkten eine Optimierung der Steuervariablen durchgeführt ist, ist oftmals vorgegeben. Die optimierten Steuervariablen werden oftmals auch in sogenannten Kennfeldern in Abhängigkeit vom Betriebspunkt hinterlegt, beispielsweise in Steuergeräten zum Steuern des technischen Systems. Eine derartige Optimierung des technischen Systems wird auch Kalibrierung genannt.

Verfahren zur Kalibrierung sind aus der WO 2016/146528 A1, der DE 10 2015 207 252 A1 oder der EP 1 703 110 A1 bekannt.

Als technisches System für die Kalibrierung kommt daher insbesondere jede Komponente einer Maschine, z.B. eines Fahrzeugs, in Frage, deren Betrieb durch Steuervariablen beeinflusst werden kann (z.B. durch Steuerung oder durch eine bestimmte Einstellung).

Ein typisches Beispiel ist die Kalibrierung eines Verbrennungsmotors. Bei der Kalibrierung eines Verbrennungsmotors geht es im Allgemeinen darum, bestimmte vorgebebene Steuervariablen des Verbrennungsmotors in Abhängigkeit vom Betriebspunkt des Verbrennungsmotors so festzulegen, sodass bestimmte Vorgaben, wie z.B.

Emissionsgrenzen oder Verbrauchsgrenzen (allgemein Ausgangsgrößen), eingehalten werden. Steuervariablen sind dabei beispielsweise ein Zündzeitpunkt, ein Einspritzzeitpunkt (z.B. Voreinspritzung, Nacheinspritzung), die Menge an rückgeführtem Abgas einer EGR (Exhaust Gas Recirculation), die Stellung einer Drosselklappe, etc. Typische Zustandsvariablen eines Verbrennungsmotors sind die Drehzahl und das Drehmoment. Ein Betriebspunkt ist damit beispielsweise durch die Drehzahl und das Drehmoment, gegebenenfalls bei bestimmten Umgebungsbedingungen, gegeben.

Andere Beispiele für ein technisches System, das kalibriert werden kann, ist eine Getriebeanwendung mit einer Getriebesteuereinheit (TCU) oder eine Hybridanwendung mit Hybridsteuereinheit und/oder Batteriemanagementsystem. Weitere Beispiel sind eine Klimatisierung eines Fahrzeugs oder eine elektronisch steuerbare Federung oder Aufhängung. Im Prinzip kann jegliches mechatronische System als technisches System, das von einer Steuereinheit gesteuert wird, kalibriert werden. Typische Beispiele von Komponenten eines Fahrzeugs, die mit zugehörigen Steuergeräten gesteuert werden, sind neben dem Verbrennungsmotor ein Getriebe, eine Antriebsbatterie, Bremsen, ein Antriebsstrang, eine Radaufhängung, etc.

Eine Kalibrierung kann aber auch zur Optimierung des Verhaltens eines technischen Systems, wie eines Fahrzeugs oder einer Komponente eines Fahrzeugs, verwendet werden. Oftmals werden durch Kalibrierung beispielsweise die Fahreigenschaften eines Fahrzeugs (z.B. Geräusch, Fahrwerk, Dämpfung, Schaltverhalten, Lenkung, Klimatisierung, etc.) hinsichtlich gewünschter Eigenschaften optimiert. Als Beispiele seien eine Dämpfungsoptimierung, Getriebeoptimierung, Kupplungsoptimierung oder die Abstimmung einer Fahrzeuglenkung genannt. Die Steuervariablen sind damit bestimmte Einstellungen am technischen System, mit denen das technische System eingestellt oder betrieben wird. Beispielsweise kann die Steifigkeit eines Fahrwerks optimiert werden, indem die Federparameter (Steuervariablen) in Fahrwerklagern variiert werden, um bestimmte Ausgangsgrößen, wie z.B. die Fahrdynamik oder den Fahrkomfort, zu beeinflussen bzw. zu optimieren. Ein anderes Beispiel ist eine hydrodynamische Kupplung, wobei der Kupplungsfüllverlauf optimiert wird, oder die Abstimmung des Verhaltens oder der Eigenschaften einer Fahrzeuglenkung.

Für die Kalibrierung entscheidend ist natürlich die Wahl der Betriebspunkte, an denen kalibriert wird. Diese Betriebspunkte sind in der Regel vorgegeben, oftmals durch den Gesetzgeber. Beispielsweise werden für Fahrzeuge sogenannte Fahrzyklen definiert, die zu verwenden sind, um bestimmte Eigenschaften einer Komponente des Fahrzeugs, beispielsweise der Verbrauch oder das Emissionsverhalten eines Verbrennungsmotors, nachzuweisen. Bekannte Fahrzyklen sind der Neue Europäische Fahrzyklus (NEFZ) oder der Worldwide Harmonized Light Vehicles Test Cycle (WLTC). Ein Fahrzyklus ist in der Regel ein Geschwindigkeits-Zeitdiagramm (analog auch Position-Zeitdiagramm) gemäß dem das Fahrzeug auf dem Rollenprüfstand, oder eine Fahrzeugkomponenten auf einem Komponentenprüfstand (beispielsweise eine Verbrennungsmotor auf einem Motorprüfstand), bewegt wird. Wird eine Fahrzeugkomponente, z.B. ein Antriebsstrang oder ein Verbrennungsmotor, auf einem Komponentenprüfstand, z.B. ein Antriebsstrangprüfstand oder ein Motorprüfstand, betrieben, dann wird der Fahrzyklus für die Simulation der Bewegung des Fahrzeugs verwendet, um aus der Simulation Steuervariablen für den Betrieb der Fahrzeugkomponente und in der Regel auch für eine mit der Fahrzeugkomponente verbundenen Belastungsmaschine auf dem Prüfstand zu berechnen. Häufig wird auch eine modellbasierte Kalibrierung durchgeführt, bei der das untersuchte Systemverhalten des technischen Systems durch ein Modell approximiert wird. Die zu optimierenden Ausgangsgrößen werden dabei aus dem Modell in Abhängigkeit von den vorgebebenen Betriebspunkten gemäß dem Belastungszyklus berechnet. Allgemein kann für ein technisches System von einem Belastungszyklus gesprochen werden, dem das technische System zur Kalibrierung unterworfen wird. Dabei werden auch bestimmte Ausgangsgrößen, wie der Verbrauch oder die Emissionen, über den Belastungszyklus gemessen und hinsichtlich der Einhaltung der gesetzlichen Bestimmungen bewertet.

Die Betriebspunkte sollen üblicherweise den gesamten Betriebsbereich des technischen Systems möglichst gut abdecken, bei einem Fahrzeug beispielsweise den gesamten möglichen Bereich der Drehzahl und des Drehmoments des Verbrennungsmotors. An den vorgesehenen Betriebspunkten wird die vorgesehene Ausgangsgröße des technischen Systems über die vorgesehenen Steuervariablen optimiert (minimiert oder maximiert), womit man über den Betriebsbereich diskret verteilte Werte der Steuervariablen (Stützstellen) erhält. Anhand der Stützstellen wird dann ein Kennfeld über den gesamten Betriebsbereich gespannt, um auch die Bereiche zwischen den Stützstellen abzudecken. Nachdem im normalen Betrieb sprunghafte oder unstetige Änderungen der Steuervariablen üblicherweise unerwünscht sind, wird ein Kennfeld in der Regel auch geglättet.

Vor allem im Umfeld von Fahrzeugen als technisches System werden häufig auch zyklusbasierte Kennwerte ermittelt, beispielsweise der gesamte Verbrauch oder die gesamte Rußmenge im Abgas oder die gesamte NOx und/oder HC Emission im Abgas über den gesamten Belastungszyklus. Ein solcher zyklusbasierter Kennwert wird beispielsweise als Summe der Werte an den einzelnen Betriebspunkten, an denen kalibriert wird, ermittelt. In der Kalibration kann auch eine Optimierung solcher zyklusbasierter Kennwerte gefordert sein, beispielsweise um die Einhaltung zulässiger Grenzwerte nachzuweisen.

Der große Nachteil dieser Art der Kalibrierung liegt darin, dass die Kalibrierung immer auf Basis eines bestimmten, vorgegebenen Belastungszyklus erfolgt. Damit ist das technische System für diesen Belastungszyklus (und auch für ähnliche Belastungszyklen) gut kalibriert.

Für Belastungszyklen im realen Betrieb, die vom Belastungszyklus, bei dem kalibriert wurde, mehr oder weniger stark abweichen können, muss das nicht unbedingt der Fall sein. Das bedeutet, dass die Ausgangsgröße im realen Betrieb auch unerwünschte, auch große, Abweichungen aufweisen kann. Ebenso erfolgt die Kalibrierung in einem bestimmten Umfeld, beispielsweise auf einem Prüfstand, an dem bestimmte Umweltbedingungen (Temperatur, Druck, Klima, usw.) herrschen. Die Umweltbedingungen des technischen Systems im realen Betrieb können aber auch von den Bedingungen am Prüfstand abweichen. Damit kann es ebenfalls zu unerwünschten, auch großen, Abweichungen der Ausgangsgröße kommen. Diese Einflüsse können aber durch eine herkömmliche Kalibrierung nicht, oder nur mit sehr großem Aufwand, ausgeräumt werden.

Es ist daher eine Aufgabe der gegenständlichen Erfindung, ein Verfahren zur Kalibrierung eines technischen Systems anzugeben, das robuster gegenüber Einflüsse im realen Betrieb des technischen Systems ist.

Diese Aufgabe wird erfindungsgelöst gelöst, indem der Belastungszyklus unter dem Einfluss zumindest einer Zufallseinflussgröße mehrmals ausgeführt wird, wobei sich bei jeder Realisierung des Belastungszyklus eine zufällige Abfolge der Anzahl von Betriebspunkten ergibt, wobei jeder Betriebspunkt durch j=1...J Zustandsvariablen des technischen Systems, die sich in Abhängigkeit von vorgegebenen Anfangssteuervariablen für die Steuervariablen des technischen Systems einstellen, charakterisiert wird, dass eine Kostenfunktion definiert wird, die abhängig von der Anzahl der Steuervariablen des technischen Systems und von der Anzahl der zufälligen Betriebspunkte des technischen Systems ist und die zumindest eine Zielfunktion mit einem Modell für eine Ausgangsgröße des technischen Systems enthält, sodass der Wert der Kostenfunktion, der für jede Realisierung des Belastungszyklus für gegebene Steuervariablen auf einer Recheneinheit berechnet wird, selbst eine Zufallsvariable ist, die eine Wahrscheinlichkeitsverteilung aufweist, dass ein Risikomaß der Wahrscheinlichkeitsverteilung definiert wird, mit dem die Wahrscheinlichkeitsverteilung auf eine skalare Größe abgebildet wird, und dass das Risikomaß durch Variation der Anzahl von Steuervariablen auf einer Recheneinheit optimiert wird, um die optimalen Steuervariablen zu erhalten, mit denen das technische System gesteuert oder eingestellt wird. Durch die Optimierung des deterministischen Risikomaßes kann die an sich stochastische Kostenfunktion hinsichtlich der Steuervariablen optimiert werden, wodurch die Optimierung robuster gegen zufällige Einflüsse wird bzw. zufällige Einflüsse bei der Optimierung berücksichtigt werden.

Vorteilhaft ist in der Kostenfunktion eine Anzahl von Beschränkung mit einem Modell einer zu beschränkenden Ausgangsgröße des technischen Systems enthalten, was es ermöglicht, solche Beschränkungen direkt bei der Optimierung zu berücksichtigen. Das ist insbesondere vorteilhaft, wenn Beschränkungen einer Ausgangsgröße des technischen Systems über den gesamten Belastungszyklus berücksichtigt werden sollen.

Zur Optimierung werden vorzugsweise iterativ die Anzahl der Steuervariablen variiert und dabei die Wahrscheinlichkeitsverteilung der Kostenfunktion erneut ermittelt, bis das Risikomaß der Wahrscheinlichkeitsverteilung optimiert ist. Hierbei wird vorteilhafterweise eine Randbedingung und/oder Nebenbedingung für die Anzahl der Steuervariablen berücksichtigt.

Weitere vorteilhafte Ausführungsformen werden durch die abhängigen Ansprüche definiert.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 eine Wahrscheinlichkeitsverteilung einer stochastischen Kostenfunktion,
Fig.2 Beispiele von Risikomaßen einer Wahrscheinlichkeitsverteilung,
Fig.3 Abfolgen von Betriebspunkten bei der mehrmaligen Realisierung eines Belastungszyklus mit dem technischen System,
Fig.4 die Abbildung der Betriebspunkte auf ein vorgegebenes Raster,
Fig.5 die sich bei der Optimierung verschiedener Risikomaße ergebenden Wahrscheinlichkeitsverteilungen und
Fig.6 eine mögliche Implementierung der erfindungsgemäßen Kalibrierung.

Die Erfindung geht davon aus, dass das technische System, beispielsweise ein (Land-, Luft-, Wasserfahrzeug, ein Verbrennungsmotor, ein Hybridantriebsstrang, ein Getriebe, ein Abgasnachbehandlungssystem eines Fahrzeugs, eine Batterie, usw., nicht wie bisher auf Basis eines einzelnen definierten Belastungszyklus modellbasiert kalibriert werden soll. Ein Belastungszyklus definiert dabei den Betrieb des technischen Systems über eine bestimmte Zeitspanne und führt bei Ausführung zu bestimmten Betriebspunkten des technischen Systems in dieser Zeitspanne. Beispielsweise kommt bei automotiven Komponenten als technisches System als Belastungszyklus oftmals ein definierter Fahrzyklus, z.B. NEDC, WLTC, etc., als zeitlicher Verlauf einer Fahrzeuggeschwindigkeit zur Anwendung. Wenn das Fahrzeug diesen zeitlichen Verlauf der Fahrzeuggeschwindigkeit folgt, beispielsweise auf einem Rollenprüfstand oder auch in einer Simulation der Fahrt des Fahrzeugs, ergeben sich daraus in der Zeitspanne des Belastungszyklus bestimmte Betriebspunkte innerhalb des möglichen Betriebsbereichs, beispielsweise als Kombination aus Drehzahl und Drehmoment des Verbrennungsmotors oder als Kombination von elektrischen Strom und elektrischer Spannung eines Elektromotors oder einer Batterie eines Hybrid- oder Elektrofahrzeugs. Die Kalibrierung des technischen Systems zielt darauf ab, zumindest eine Ausgangsgröße des technischen Systems, die während der Ausführung des Belastungszyklus auftritt, beispielsweise ein Verbrauch oder eine Emission, hinsichtlich bestimmter Kriterien zu optimieren (in der Regel zu minimieren oder zu maximieren). Zusätzlich wird auch die Einhaltung von Grenzwerten von zyklusbasierten Kennwerten, beispielsweise die gesamte Rußemission während des Belastungszyklus oder die NOx oder HC-Emission während des gesamten Belastungszyklus oder der Gesamtverbrauch, gefordert.

Für die modellbasierte Kalibrierung wird eine Zielfunktion y definiert, die optimiert, also entweder minimiert oder maximiert, werden soll. Die Zielfunktion y kann wie folgt angeschrieben werden

$$y = \sum_{i=1..M} f\left(x_i, \theta_i\right) \cdot w_{fi}.$$

Darin bezeichnet f das bekannte oder vorgegebene Modell zur Berechnung einer zu optimierenden Ausgangsgröße, beispielsweise der Verbrauch oder eine Emission eines Verbrennungsmotors. $x_i$ bezeichnet den i-ten Betriebspunkt (i=1... M), der durch den Belastungszklyus vorgegeben wird, $\theta_i$ die Steuervariablen, mit denen das technische System im i-ten Betriebspunkt gesteuert oder eingestellt wird und $w_{fi}$ Gewichte für den i-ten Betriebspunkt. Die Gewichte $w_{fi}$ bewerten die Wichtigkeit bestimmter Betriebspunkte und sind bekannt oder vorgegeben. Beispielsweise werden bestimmte Betriebspunkte häufiger vorkommen als andere, die dann höher gewichtet werden können. Im einfachsten Fall können die Gewichte $w_{fi}$ auch mit Eins angenommen werden. Das Modell f kann ein beliebiges mathematisches oder physikalisches Modell sein, beispielsweise ein neuronales Netzwerk, ein lineares Modellnetzwerk, ein funktionaler Zusammenhang, usw. Um die Einhaltung von Grenzwerten von zyklusbasierten Kennwerten zu berücksichtigen, können bei der Kalibrierung auch k=1... K Beschränkungen $B_k$ in der Art

$$\underbrace{\sum_{i=1..M} g_k\left(x_i, \theta_i\right) \cdot w_{gki}}_{B_k} \leq G_k$$

berücksichtigt werden. Darin beschreibt $g_k$ ein Modell für die k-te zu beschränkende Größe, die ebenfalls eine Ausgangsgröße des technischen Systems 1 ist, beispielsweise Rußemission, Verbrauch, NOx oder HC-Emissionen, usw., und $w_{gki}$ bezeichnet wiederum bekannte Gewichte, die im einfachsten Fall auch wieder als Eins angenommen werden können. Eine derartige Beschränkung $B_k$ bewertet somit eine Ausgangsgröße über den gesamten Belastungszyklus, indem die Werte der Ausgangsgröße über die Anzahl i der Betriebspunkte $x_i$ aufsummiert wird. Dabei können auch mehrere Beschränkungen $B_k$ gleichzeitig berücksichtigt werden. $G_k$ ist der vorgegebene Grenzwert für die k-te zu beschränkende Größe. In einer Beschränkung $B_k$ und in der Zielfunktion y kann auch die gleiche Ausgangsgröße bewertet werden, womit für die k-te Beschränkung $B_k$ auch $g_k = f$ gelten kann, und damit auch $w_{fi} = w_{gki}$.

Die Optimierung kann dann beispielsweise wie bisher allgemein in der Form $\theta = \min/\max\limits_{\theta} y$ , gegebenenfalls mit den k Beschränkungen $B_k$ als Nebenbedingung, erfolgen. Mit anderen Worten werden die Steuervariablen $\theta$ variiert, um die Zielfunktion y zu minimieren oder zu maximieren und gegebenenfalls gleichzeitig die Einhaltung der Beschränkungen sichergestellt.

Oftmals wird für die Kalibrierung aus der Zielfunktion y und den Beschränkungen $B_k$ eine Kostenfunktion c definiert, die dann optimiert wird. Die k Beschränkungen $B_k$ können der Einfachheit halber über eine Summe in die Kostenfunktion c integriert werden. Die Kostenfunktion c kann beispielsweise in der Form

$$c(\theta) = \sum_{i=1..M} \left\{ f\left(x_i, \theta_i\right) \cdot w_{fi} \cdot c_f + \varphi\left(\sum_{k=1..K} \left[ g_k\left(x_i, \theta_i\right) \cdot w_{gki} - G_k\right]^+ \cdot c_{gk}\right) \right\}$$

angeschrieben werden. Diese Kostenfunktion c wird dann optimiert, $\theta = \min/\max\limits_{\theta} c(\theta)$ . Darin können auch Kosten $c_f$ berücksichtigt werden, um die entstehenden Kosten für die Ausgangsgröße, die durch das Modell f bestimmt wird, zu gewichten. Ebenso können Kosten $c_{gk}$ für die Beschränkungen $B_k$ berücksichtigt werden, die jedoch nur dann entstehen, wenn die Beschränkung $B_k$ verletzt wird, was in der Kostenfunktion durch den Ausdruck $[h]^+ = \max\{0, h\}$ beschrieben ist. Die Kosten $c_f$, $c_{gk}$ können definiert werden oder sind vorgegeben. Die Verletzung einer Beschränkung $B_k$ könnte zusätzlich und optional noch durch eine vorgegebene Straffunktion $\varphi$ bewertet werden. Beispielsweise könnte als Straffunktion $\varphi(x)=x$ angesetzt werden, womit $\varphi$ in der Kostenfunktion praktisch nicht vorkäme. Eine andere mögliche Straffunktion ist beispielsweise $\varphi(x)=x^2$, um eine Verletzung der Beschränkung $B_k$ quadratisch zu bestrafen. Natürlich sind auch eine Fülle weiterer Straffunktionen $\varphi$ denkbar. In der Kostenfunktion c kann aber auch nur die Zielfunktion y berücksichtigt werden, womit der Term mit den Beschränkungen $g_k$ wegfallen würde. Dieses Optimierungsproblem kann dann auf einer Recheneinheit (Hardware mit Software) für einen bestimmten Belastungszyklus mit vorhandenen Lösungsalgorithmen gelöst werden.

Bei dieser Kalibrierung werden aber Umgebungsvariablen des technischen Systems im realen Betrieb, wie z.B. die Umgebungstemperatur, der Umgebungsdruck, die Luftfeuchtigkeit, Wetterbedingungen (Regen, Eis, Schnee, Sonne, Wind, etc.), usw., nicht berücksichtigt. Hinzu kommt, dass die Umgebungsvariablen im realen Betrieb typischerweise keine Konstanten sind, sondern Zufallsgrößen. Neben den Umgebungsvariablen gibt es aber noch weitere Einflussgrößen, die im realen Betrieb zufallsbehaftet sind. Beispiele hierfür sind Regelunsicherheiten, Sensor- oder Aktuatorunsicherheiten, Modellunsicherheiten oder Einstellunsicherheiten. Die Steuervariablen $\theta$ werden im realen Betrieb des technischen Systems üblicherweise mittels Regler eingeregelt. Dabei kommt es naturgemäß zu Regelunsicherheiten (begrenzte Anstiegszeiten, Überschwingen, Regelfehler, usw.), sodass die tatsächlich realisierte Steuervariable von der gewünschten Sollgröße abweichen kann. Für jede Regelung bedarf es auch Sensoren zur Erfassung von Istgrößen und Aktuatoren, um die Steuervariable am technischen System tatsächlich einstellen zu können. Die Genauigkeit der Sensoren und Aktuatoren ist ebenfalls beschränkt, was zu Aktuatorunsicherheiten führt. Jedes Modell ist lediglich eine Approximation der Realität, sodass sich daraus ebenfalls Modellunsicherheiten ergeben. Werden Steuervariablen $\theta$ zum Einstellen des technischen Systems 1 verwendet, so ergeben sich durch die Einstellung Einstellunsicherheiten. Es gibt damit Zufallseinflussgrößen Z, die den Betrieb des technischen Systems 1 beeinflussen. Eine Zufallseinflussgröße Z ist somit eine zufallsbehaftete Größe von der die Zielfunktion y und/oder eine Beschränkungen $g_k$, oder die Kostenfunktion c, abhängig ist. Werden solche Zufallseinflussgrößen Z in der Zielfunktion y und/oder in den Beschränkungen $g_k$ bei der Kalibration berücksichtigt, ist die Zielfunktion y und/oder die Beschränkung $g_k$, sowie eine daraus gebildete Kostenfunktion c, aber selbst nicht mehr deterministisch, sondern ebenfalls stochastisch, also zufallsbehaftet. Damit kann die Optimierung für die Kalibrierung mit herkömmlichen Lösungsalgorithmen zur Lösung des Optimierungsproblems aber nicht mehr gelöst werden. Der Einfluss solcher Zufallseinflussgrößen Z auf die Kalibration des technischen Systems wurde daher bisher nicht berücksichtigt.

Die Kostenfunktion c unter Berücksichtigung von Zufallseinflussgrößen Z kann dann beispielsweise in der Form

$$c(\theta, Z) = \sum_{i=1..M} \left\{ f\left(x_i, \theta_i, Z\right) \cdot w_{fi} \cdot c_f + \varphi\left( \sum_{k=1..K} \left[ g_k\left(x_i, \theta_i, Z\right) \cdot w_{gki} - G_k \right]^+ \cdot c_{gk} \right) \right\}$$

angeschrieben werden, wobei der Term mit den Beschränkungen $B_k$ wieder optional ist, z.B. wenn keine Beschränkungen $B_k$ berücksichtigt werden. Darin enthält das Modell f der Zielfunktion y zumindest eine Zufallseinflussgröße Z, wobei auch die Beschränkung $B_k$ von einer Zufallseinflussgröße Z abhängig sein kann. Es sei angemerkt, dass natürlich in der Zielfunktion f und in den Beschränkungen $B_k$ nicht dieselbe Zufallseinflussgröße Z enthalten sein muss.

Die zufallsbehafteten Beschränkungen $B_k = \sum_{i=1..M} g_k\left(x_i, \theta_i, Z\right) \cdot w_{gki}$ müssen dabei nicht als Kosten in der Kostenfunktion $c(\theta, Z)$ integriert werden, sondern könnten bei der Optimierung auch als stochastische Nebenbedingung berücksichtigt werden. Die Kostenfunktion $c(\theta, Z)$ würde sich dann zu

$$c(\theta, Z) = \sum_{i=1..M} \left\{ f\left(x_i, \theta_i, Z\right) \cdot w_{fi} \cdot c_f \right\}$$

ergeben, wobei die Kosten $c_f$ wieder definiert oder vorgegeben, z.B. auch auf Eins gesetzt, werden können. Als stochastische Nebenbedingung kann mit den Beschränkungen $B_k$ beispielsweise gefordert werden, dass die Wahrscheinlichkeit W mit der k-ten Beschränkung $B_k$ über den Belastungszyklus einen vorgegebenen Grenzwert für die k-te zu beschränkende Größe zu erreichen mit einer Wahrscheinlichkeitsschranke $W_S$ beschränkt sein soll. Mathematisch kann das in der Form

$$W\left\{ \sum_{k=1..K} g_k\left(x_i, \theta_i, Z\right) \cdot w_{gki} > G_k \right\} \le W_S$$

ausgedrückt werden.

Es ist natürlich ebenso denkbar, dass Beschränkungen $B_k$ bestimmter beschränkter Größen in der Kostenfunktion $c(\theta, Z)$ enthalten sind und für andere beschränkte Größen mit der zugehörigen Beschränkung $B_k$ wiederum eine stochastische Nebenbedingung für die Optimierung formuliert wird.

Diese Kostenfunktion $c(\theta, Z)$ ist damit ebenso zufallsbehaftet und kann daher mit gängigen Methoden nicht optimiert werden.

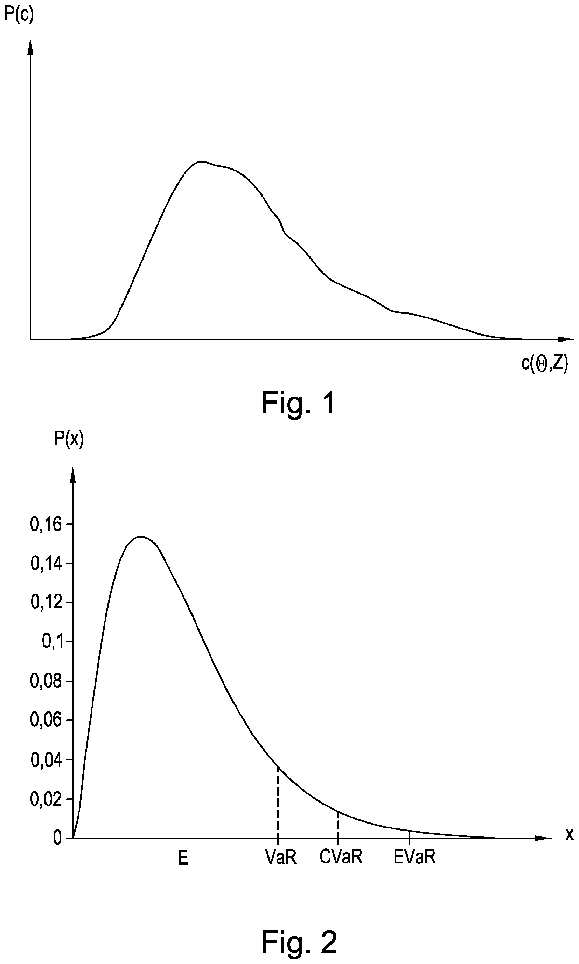

Würde man die Kostenfunktion $c(\theta, Z)$ für den gleichen Belastungszyklus unter dem Einfluss von zumindest einer Zufallseinflussgrößen Z, die mit einer Wahrscheinlichkeitsverteilung modelliert werden kann, mehrmals ermitteln, würde man eine statistische Verteilung (Wahrscheinlichkeitsverteilung) der Kostenfunktion $c(\theta, Z)$ erhalten, weil die Zufallseinflussgrößen Z stochastisch sind. Die sich ergebende Wahrscheinlichkeitsverteilung kann als Dichtefunktion P(c) wie in Fig. 1 dargestellt werden. Das gleiche gilt natürlich analog für eine stochastische Nebenbedingung, für die sich ebenfalls eine Wahrscheinlichkeitsverteilung ergibt.

Nachdem die stochastische Kostenfunktion $c(\theta, Z)$ nicht direkt optimiert werden kann, wird erfindungsgemäß für die stochastische Kostenfunktion $c(\theta, Z)$ ein Risikomaß $\rho$ (als skalare Größe) definiert. Das Risikomaß $\rho$ einer Wahrscheinlichkeitsverteilung selbst ist wiederum deterministisch und kann daher optimiert werden. Das Risikomaß $\rho$ ist eine statistische Kenngröße, die die Wahrscheinlichkeitsverteilung einer Zufallsvariablen, hier der Kostenfunktion $c(\theta, Z)$, charakterisiert. Das Risikomaß $\rho$ bildet die Wahrscheinlichkeitsverteilung auf eine reelle Zahl ab. Für die Kalibrierung kann nun das Risikomaß $\rho$ für die stochastische Kostenfunktion $c(\theta, Z)$ optimiert werden, was durch

$$\theta = \min_{\theta}/\max \rho\left(c(\theta, Z)\right)$$

ausgedrückt werden kann. Üblicherweise wird das Risikomaß $\rho$ minimiert. Durch diese Optimierung wird die Wahrscheinlichkeitsverteilung P(c) der Kostenfunktion $c(\theta, Z)$ durch das gewählte Risikomaß $\rho$ in gewünschter Weise geformt, sodass die Kalibrierung robuster gegenüber zufälligen Einflüssen wird. Das bedeutet, dass die kalibrierten Steuervariablen $\theta$, als Ergebnis der Optimierung, die Unsicherheiten im realen Betrieb des technischen Systems 1 besser abbilden und damit unter einer größeren Spannweite von Bedingungen des realen Betriebs gute Ausgangsgrößen liefern. Die Optimierung der Steuervariablen θ wird damit robuster gegenüber zufällige Einflüsse.

Aus der Statistik sind verschiedene Risikomaße ρ bekannt, beispielsweise der Erwartungswert E, der Value-at-Risk (VaR), der Conditional-Value-at-Risk (CVaR) oder der Entropic-Value-at-Risk (EVaR), um einige zu nennen. Selbstverständlich können auch andere Risikomaße ρ definiert und verwendet werden.

Der Erwartungswert ist der im Mittel auftretende Wert der Zufallsvariablen. Minimierung des Erwartungswertes führt zu Ergebnissen, deren mittlerer Dichtefunktionswert minimal ist. Die anderen genannten Risikomaße sind risikoaverser und beschreiben auf verschiedene Art und Weise den rechten Ausläufer der Wahrscheinlichkeitsverteilung der Zufallsvariable, d.h. sie beschreiben die Wahrscheinlichkeitsverteilung der schlechtesten Ausgänge, also jene Fälle, in denen die zu minimierende Zufallsvariable ihre größten Werte annimmt. Das ist in der Regel genau der Bereich, der in der Kalibrierung der interessanteste ist, weil darin die größten Ausreißer der Zufallsvariablen enthalten sind. Durch die Beeinflussung dieses rechten Ausläufers der Wahrscheinlichkeitsverteilung können diese Ausreißer reduziert werden, was für den realen Betrieb des technischen Systems natürlich vorteilhaft ist.

Der VaR einer Zufallsvariablen X zum Konfidenzniveau α ist der Wert, der mit Wahrscheinlichkeit α unterschritten und mit Wahrscheinlichkeit 1-α überschritten wird. Der VaR ist damit die α-Quantil der Wahrscheinlichkeitsverteilung der Zufallsvariablen X. Der VaR ist damit in anderen Worten der kleinste Wert der Zufallsvariablen X der (1-α)*100% der schlechtesten Realisationen oder äquivalent der größte Wert der besten α*100% Realisationen der Zufallsvariablen X. Dementsprechend bedeutet die Minimierung von VaR das Minimieren der besten α*100% der Realisationen der Zufallsvariablen X.

Der CVaR ist der Erwartungswert E der Zufallsvariablen X für alle Werte der Zufallsvariablen X größer dem VaR, oder mathematisch ausgedrückt $CVaR(X) := E[X|X \geq VaR(X)]$. Der CVaR ist damit der Mittelwert der Fläche unter der Wahrscheinlichkeitsverteilung rechts vom VaR oder der mittlere VaR über alle Konfidenzniveaus größer α. Die Minimierung des CVaR ist damit risikoaverser und impliziert die Minimierung der durchschnittlichen Werte der Zufallsvariablen X, welche VaR überschreiten. Das bedeutet, dass der durchschnittliche schlimmste Fall minimiert wird.

Der EVaR ist motiviert durch seine Eigenschaft sowohl VaR als auch CVaR nach oben zu beschränken, womit der EVaR noch risikoaverser ist. Der EVaR am Konfidenzniveau α ist wie folgt definiert,

$$EVaR(X) := \inf_{z>0} \left\{ z^{-1} \ln \frac{M_X(z)}{1-\alpha} \right\} \text{ mit } M_X(z) = E\left[ e^{zX} \right]$$

.

Die oben beschriebenen Risikomaße ρ einer Zufallsvariablen X werden in Fig.2 am Beispiel einer Chi-Quadrat-Verteilung als Wahrscheinlichkeitsverteilung P(X) zur Erläuterung veranschaulicht.

Welches Risikomaß ρ für die Optimierung verwendet wird kann abhängig sein von den Vorgaben und Umständen der Kalibrierung, aber auch vom technischen System und von der zur optimierenden Ausgangsgröße des technischen Systems. Wenn beispielsweise ein gutes Ergebnis im Durchschnitt angestrebt wird, dann wäre die Minimierung des Erwartungswertes der Wahrscheinlichkeitsverteilung der Zufallsvariablen X eine Option. Damit können aber nicht sicher große Werte der Zufallsvariablen X (also negative Ausreißer) ausgeschlossen werden, da der Durchschnitt nur bedeutet, dass genügend kleine Werte der Zufallsvariablen X vorhanden sind, die die großen Werte und auch seltene extreme Ausreißer ausgleicht. Wenn in der Kalibrierung Einfluss auf den rechten Ausläufer der

Wahrscheinlichkeitsverteilung (also wo die (extremen) Ausreißer vorkommen) genommen werden soll, dann bieten sich als Risikomaß ρ der VaR, CVaR oder EVaR, oder auch andere Risikomaße, an. Dabei kann durch Wahl des Konfidenzniveaus α zusätzlich Einfluss auf das Ergebnis der Kalibrierung genommen werden. Durch die Optimierung des VaR kann α*100% der Verteilungsdichte nach links geschoben werden, aber (1-α)*100% der Verteilungsdichte wird nicht berücksichtigt, womit man mit dem VaR wieder keine unmittelbare Kontrolle über die extremen Ausreißer erhält. Im Gegensatz dazu erlaubt der CVaR oder EVaR die Minimierung der Werte der Zufallsvariable X im Falle extremer Ausreißer. Die Optimierung des CVaR kann damit als Optimierung der schlechtesten Werte betrachtet werden.

Die erfindungsgemäße Kalibrierung geht damit von einer Kostenfunktion c(θ,Z) aus, die von zumindest einer Steuervariablen θ und zumindest einer Zufallseinflussgröße Z abhängig ist. Diese Kostenfunktion c(θ,Z) ist damit die Zufallsvariable X mit einer sich ergebenden Wahrscheinlichkeitsverteilung P(X) bei mehrmaliger Realisierung der Kostenfunktion c(θ,Z). Für die Wahrscheinlichkeitsverteilung P(X) der Kostenfunktion c(θ,Z) wird ein Risikomaß ρ definiert, dass dann durch Variation der Steuervariablen θ optimiert, in der Regel minimiert, wird.

Die Kostenfunktion c(θ,Z) kann an sich beliebig sein und kann nur einen einzigen i-ten Betriebspunkt betrachten (man spricht dann häufig von lokaler Optimierung) oder gleichzeitig mehrere Betriebspunkte bewerten. Die Kostenfunktion c(θ,Z) kann auch alle i Betriebspunkte gleichzeitig bewerten (man spricht dann häufig von globaler Optimierung). Die Kostenfunktion c(θ,Z) kann eine Zielfunktion y mit einem Model f für die zu optimierende Ausgangsgröße und mit Gewichten w enthalten. Ebenso können in der Kostenfunktion c(θ,Z) Beschränkungen oder Nebenbedingungen enthalten sein. Die Kostenfunktion c(θ,Z) kann auch Straffunktionen φ und/oder Kosten $c_f$, $c_{gk}$ beinhalten.

Für die erfindungsgemäße Kalibrierung wird ein Belastungszyklus definiert und der gleiche Belastungszyklus wird mehrmals unter Berücksichtigung der zumindest einen Zufallseinflussgröße Z ausgeführt und jeweils die Kostenfunktion c(θ,Z) ermittelt (mehrmalige Realisierung der Kostenfunktion c(θ,Z)). Falls eine stochastische Nebenbedingung einer k-ten zu beschränkende Größe wie oben beschrieben verwendet wird, wird auch die k-te Beschränkung

$$B_k = \sum_{i=1..M} g_k \left( x_i, \theta_i, Z \right) \cdot w_{gki}$$

unter Berücksichtigung zumindest einer Zufallseinflussgröße Z für jede Realisierung des Belastungszyklus ermittelt. Das lässt sich natürlich einfach realisieren, wenn die Kostenfunktion c(θ,Z) und/oder eine Beschränkung $B_k$ mit einem Modell, beispielsweise einem Modell f, $g_k$, definiert ist. Die Wahrscheinlichkeitsverteilung der Zufallseinflussgröße Z beeinflusst damit den Wert der Kostenfunktion c(θ,Z), und gegebenenfalls auch den Wert einer Beschränkung $B_k$, für die jeweilige Durchführung des Belastungszyklus.

Beispielsweise könnte eine bestimmte Fahrstrecke eines Fahrzeugs, z.B. eine Fahrt von Punkt A nach Punkt B über eine vorgegebene Strecke, als Belastungszyklus definiert sein. Diese Fahrstrecke könnte mit einem Fahrzeug, auch mit unterschiedlichen Fahrern, beliebig oft abgefahren werden. Dabei erfährt das Fahrzeug verschiedene Umgebungsbedingungen und andere Zufallseinflussgrößen Z (wie z.B. Verkehr, bestimmte Ereignisse, etc.). Die Fahrstrecke könnte aber auch nur einmal abgefahren werden und dabei die Fahrstrecke beschreibende Parameter, wie Neigung, Steigung, Gefälle, Krümmung der Fahrbahn, Kurvenradien, Distanzen, Kreuzungen mit anderen Straßen, Verkehrszeichen (z.B. Geschwindigkeitsbeschränkungen), usw., erfasst werden. Eine derart beschriebene Fahrstrecke kann dann in einer Simulation auf einer Simulationseinheit (Hardware und/oder Software) verwendet werden, um die Fahrt eines Fahrzeugs entlang der erfassten Fahrstrecke zu simulieren. Dabei können in der Simulation Parameter der simulierten Fahrt, wie beispielsweise Fahrbahnzustand (Nässe, Schnee, Eis), Wetter (Wind, Regen, Schnee, etc.), Fahrereigenschaften (aggressiver Fahrer oder konservativer Fahrer, Bremsverhalten, etc.), Verkehr, usw., zufällig variiert werden. Die simulierte Fahrt erfolgt damit immer entlang derselben Fahrstrecke aber unter verschiedenen Rahmenbedingungen, was in der Simulation durch Zufallseinflussgrößen Z mit vorgegebener Wahrscheinlichkeitsverteilung abgebildet wird. Für die Simulation kann eine Fahrstrecke aber auch frei definiert werden, beispielsweise in einem Fahrstrecken Editor, und muss nicht unbedingt aus einer realen Fahrt gewonnen werden. Auch ein anderes technisches System kann natürlich auf einer Simulationseinheit simuliert werden oder real betrieben werden, um die mehreren Realisierungen des Belastungszyklus erhalten.

Die Charakterisierung des Belastungszyklus hängt natürlich auch vom technischen System ab, das kalibriert werden soll. Im automotiven Bereich ist der Belastungszyklus üblicherweise ein Fahrzyklus, also eine bestimmte Fahrstrecke, die mit einem Fahrzeug (real oder simuliert) abgefahren wird. Bei einer Maschine als technisches System ist ein Belastungszyklus beispielsweise ein sich wiederholender Arbeitsablauf, wobei auch mehrere wiederholende Arbeitsabläufe den Belastungszyklus bilden können.

Während der Durchführung der Belastungszyklen werden zu vorbestimmten Zeitpunkten die j=1...J Zustandsvariablen ZVj, die den Betriebspunkt $x_i$ charakterisieren, erfasst oder aus der Simulation geliefert. Bei einem Verbrennungsmotor beispielsweise die Drehzahl und das Drehmoment des Verbrennungsmotors, bei einem Hybridantriebsstrang oder in einem Elektrofahrzeug beispielsweise elektrischer Strom und elektrische Spannung der Fahrzeugbatterie, in einem Abgasnachbehandlungssystem beispielsweise die Abgastemperatur und der Abgasmassenstrom. Je nach technischem System, das kalibriert werden soll werden natürlich verschiedene (auch in der Anzahl) Zustandsvariablen benötigt.

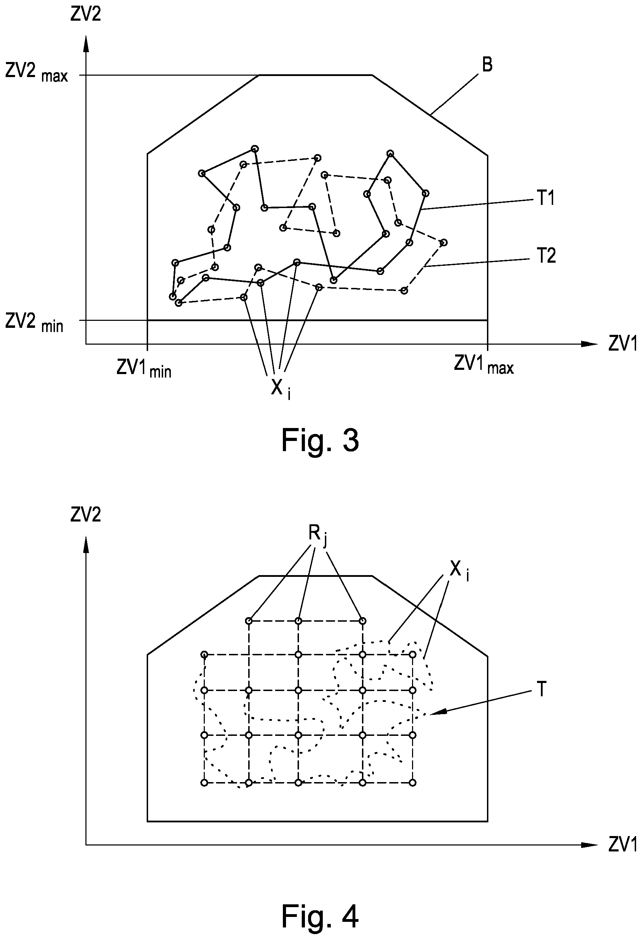

Damit erhält man eine Vielzahl von Realisierungen des Belastungszyklus, die im möglichen Betriebsbereich B des technischen Systems, der von den Zustandsvariablen ZVj (z.B. das Drehmoment M und die Drehzahl n) aufgespannt wird, als Abfolge T1, T2 von Betriebspunkten $x_i$ dargestellt werden kann, wie in Fig.3 am Beispiel von zwei Realisierungen vereinfacht dargestellt. Die Anzahl i der Betriebspunkte $x_i$ in jeder Abfolge $T_m$ mit der Anzahl m der Realisierungen hängt natürlich davon ab, wie oft die Zustandsvariablen ZVj während der Durchführung erfasst oder ermittelt werden und muss auch nicht für jede der Abfolgen $T_m$ gleich sein.

Um den Einfluss der Zufallseinflussgrößen Z auf die Kalibrierung gut abbilden zu können, werden ausreichend viele Realisierungen des Belastungszyklus verwendet. Die genaue benötigte Anzahl kann dabei nicht festgelegt werden, da diese von den jeweiligen Umständen abhängig ist, beispielsweise von der Anwendung, der Anzahl der Zufallseinflussgrößen Z, usw. Es ist jedenfalls ein guter Kompromiss zwischen Aussagekraft und Aufwand zu suchen. Im Falle einer modellbasierten Kostenfunktion c(θ,Z) ist es natürlich einfacher eine entsprechende Anzahl von Realisierungen zu verwirklichen, da das lediglich eine Frage der Rechenkapazität und Rechenzeit ist.

Die zumindest eine Zufallseinflussgröße Z wirkt sich in jeder Realisierung des Belastungszyklus auf die Anzahl i der Betriebspunkte $x_i$ in der zugehörigen Abfolge T aus. Die Betriebspunkte $x_i$ sind damit in jeder Abfolge $T_m$ gemäß der Zufallseinflussgröße Z zufallsbehaftet.

Wenn die Betriebspunkte $x_i$ jeder Abfolge $T_m$ nicht auf einem gemeinsamen Raster liegen, was üblicherweise der Fall sein wird, können die Betriebspunkte $x_i$ zuerst auf ein vorgegebenen Raster projiziert werden, wie anhand von Fig.4 erläutert wird, da das die nachfolgenden Berechnungen vereinfacht. Ein aggressiver Fahrer wird eine bestimmte Fahrstrecke wahrscheinlich schneller absolvieren als ein konservativer Fahrer oder eine Fahrstrecke wird bei Regen langsamer durchfahren als bei Sonnenschein. Die Fahrzeit ist daher unterschiedlich, was beispielsweise auch zu unterschiedlichen Anzahlen i von Betriebspunkten $x_i$ in den verschiedenen Realisierungen führt.

Daher kann im Betriebsbereich B ein Raster mit Rasterpunkten $R_j$ definiert werden (Fig.4), wobei das Raster beliebig sein kann. Das Raster muss nicht regelmäßig sein und kann in bestimmten Bereichen des Betriebsbereichs B enger sein, als in anderen, beispielsweise um den besonders interessanten Bereich des Betriebsbereichs B besser abzudecken. Beispielsweise könnte ein bestimmter Bereich des Betriebsbereichs B für die Emission und den Verbrauch eines Verbrennungsmotors besonders interessant sein und könnte daher mit einem engeren Raster belegt sein.

Jede Abfolge $T_m$ von Betriebspunkten $x_i$ der verschiedenen Realisierungen des Belastungszyklus kann nun auf die Rasterpunkte $R_j$ projiziert werden, beispielsweise über den euklidischen Abstand der Betriebspunkte $x_i$ zu den Rasterpunkten $R_j$. Dabei wird jeder Betriebspunkt $x_i$ auf den Rasterpunkt $R_j$ mit dem kleinsten euklidischen Abstand zum Betriebspunkt $x_i$ projiziert. Selbstverständlich kann die Projektion auch anders erfolgen. Dabei kann es natürlich auch Rasterpunkte $R_j$ geben, auf die kein Betriebspunkt $x_i$ projiziert wird, beispielsweise weil die Abfolge $T_m$ den Betriebsbereich B nicht vollständig ausnutzt. Ebenso kann es Rasterpunkte $R_j$ geben, auf die mehr als ein Betriebspunkt $x_i$ abgebildet wird.

Durch diese Projektion können auch gleichzeitig die Gewichte $w_{fi}$ und/oder $w_{gk}$ der einzelnen Betriebspunkte $x_i$ einer Abfolge $T_m$ ermittelt werden, beispielsweise als die Anzahl der Betriebspunkte $x_i$, die auf einen bestimmten Rasterpunkt $R_j$ projiziert wurde. Falls auf einen Rasterpunkt $R_j$ keine Betriebspunkt $x_i$ projiziert wurde, kann auch das Gewicht Null vergeben werden, oder es wird dafür ein sehr kleines Gewicht vergeben. Selbstverständlich können die Gewichte $w_i$ auch anders vergeben werden.

Wenn die Betriebspunkte $x_i$ einer Abfolge bereits auf einem festen Raster sind, dann ist der Schritt der Projektion, und gegebenenfalls auch der Schritt der Vergabe von Gewichten, natürlich nicht erforderlich. Falls das nicht der Fall sein sollte und ein Raster verwendet wird, dann sei zum Verständnis festgehalten, dass durch die Projektion die Anzahl der Betriebspunkte $x_i$ einer Abfolge $T_m$ auf die Anzahl der Rasterpunkte $R_j$ reduziert wird. Für die nachfolgende Optimierung treten damit die Rasterpunkte $R_j$ an die Stelle der Betriebspunkte $x_i$. Der Einfachheit halber wird aber trotzdem von Betriebspunkten $x_i$ gesprochen werden.

Für die Realisierungen des Belastungszyklus werden natürlich Steuervariablen $\theta$ benötigt. Bei einer realen Fahrt mit einem Fahrzeug müssen die für die Fahrt benötigten Steuervariablen natürlich hinterlegt sein. Das gleiche gilt natürlich bei einer Simulation der Belastungszyklen. Diese Anfangssteuervariablen sind bekannt oder vorgegeben. Beispielsweise könnte zuerst eine herkömmliche Kalibrierung nach dem Stand der Technik, also ohne Zufallseinflussgrößen, durchgeführt werden, um die Anfangssteuervariablen zu ermitteln. Alternativ könnte die zumindest eine Anfangssteuervariable auch einfach angenommen oder plausibel gesetzt werden.

Würde man nun mit gegebenen Anfangssteuervariablen für jede Realisierung des Belastungszyklus (Abfolgen $T_m$) unter Einfluss der zumindest einen Zufallseinflussgröße Z auf einer Recheneinheit die Kostenfunktion $c(\theta,Z)$, und gegebenenfalls auch eine k-te Beschränkung $B_k$ über den Belastungszyklus, ermitteln, würde sich eine Wahrscheinlichkeitsverteilung z.B. wie in Fig.1 dargestellt ergeben. Die Erfindung zielt nun darauf ab, die sich ergebende Wahrscheinlichkeitsverteilung P der Kostenfunktion $c(\theta,Z)$ gezielt zu beeinflussen, indem ein definiertes Risikomaß $\rho$ der Wahrscheinlichkeitsverteilung P aller Realisierungen des Belastungszyklus optimiert wird, was mathematisch in der

$$\theta = \min_{\theta} / \max \rho\left(c(\theta,Z)\right)$$

Form angeschrieben werden kann. In anderen Worten ausgedrückt, werden die Steuervariablen $\theta$ variiert, sodass sich eine Wahrscheinlichkeitsverteilung P(c) der Kostenfunktion $c(\theta,Z)$ aller Realisierungen des Belastungszyklus ergibt, die das gewünschte Risikomaß $\rho$ aufweist, beispielsweise einen minimalen Erwartungswert E, ein minimales VaR, CVaR oder EVaR. Dabei wird gegebenenfalls auch die Einhaltung einer stochastischen Neben-

$$W\left\{\sum_{k=1..K} g_k\left(x_i,\theta_i,Z\right)\cdot w_{gki} > G_k\right\} \leq W_S$$

bedingung, beispielsweise der Art .geprüft. Die Kostenfunktion $c(\theta,Z)$,

$$B_k = \sum_{i=1..M} g_k\left(x_i,\theta_i,Z\right)\cdot w_{gki}$$

und gegebenenfalls eine k-te Beschränkung , kann für gegebene Betriebspunkte $x_i$ und bestimmte Steuervariablen $\theta$ (die in der Optimierung variiert werden) auf einer Recheneinheit berechnet werden, sodass die Variation einfach erfolgen kann.

Die Optimierung ist im Falle des Erwartungswertes E trivial, weil nur das Mittel der auftretenden Werte der Kostenfunktion $c(\theta,Z)$ minimiert werden muss. Für einfache Kostenfunktionen $c(\theta,Z)$ können die Wahrscheinlichkeitsverteilung und bestimmte Risikomaße $\rho$ bekanntermaßen berechnet und analytisch optimiert werden. Für komplexere Kostenfunktionen $c(\theta,Z)$ ist eine analytische Lösung der Optimierung hingegen nicht oder nur sehr aufwendig möglich und die Risikomaße $\rho$ werden mit geeigneten Methoden, beispielsweise Monte Carlo Methoden, angenähert. Aber auch hierzu sind entsprechende Methoden bekannt und verfügbar. Es sind auch äquivalente Optimierungsprobleme bekannt, um bestimmte Risikomaße $\rho$ zu optimieren. Beispielsweise kann der CVaR in äquivalenter Weise aus dem Optimierungsproblem

$$\min_{\theta,\zeta\in\mathbb{R}}\left\{\zeta+\frac{1}{1-\alpha}\mathrm{E}\left[\left(c(\theta,Z)-\zeta\right)^+\right]\right\}$$

erhalten werden. Darin ist wieder das Konfidenzniveau $\alpha$ enthalten und es gilt $[h]^+ = \max\{0, h\}$. Das derart optimierte $\zeta$ entspricht dann dem CVaR. Ebenso existiert für den EVaR ein äquivalentes Optimierungsproblem in der Form

$$\min_{\theta,t>0}\left\{t\ln M_{c(\theta,Z)}(t^{-1})-t\ln(1-\alpha)\right\}$$

mit $M_X(z) = E[e^{zX}]$. Das derart optimierte $t$ entspricht dann dem EVaR.

Zur Lösung der obigen Optimierungsprobleme sind entsprechende Lösungsalgorithmen verfügbar, die auf einer Recheneinheit (Hardware) als Software ausgeführt werden können.

Bei der Optimierung können in hinlänglich bekannter Weise zusätzlich oder alternativ zu einer stochastischen

$$W\left\{\sum_{k=1..K} g_k\left(x_i,\theta_i,Z\right)\cdot w_{gki} > G_k\right\} \leq W_S$$

Nebenbedingung, beispielsweise der Art                          , auch nichtstochastische Randbedingungen und/oder Nebenbedingungen berücksichtigt werden. Typische nichtstochastische Randbedingungen sind vorgegebene obere und/oder untere Grenzwerte für zulässige Werte für die Anzahl der Steuervariablen $\theta$.

Im Zusammenhang mit der Kalibrierung eines technischen Systems werden oftmals Kennfelder der Steuervariablen $\theta$ über den Betriebsbereich B erstellt. Hierbei ist es üblicherweise erwünscht, dass die Kennfelder über den Betriebsbereich glatt sind und die Steigung zwischen zwei Punkten des Kennfeldes beschränkt ist. Wenn $x_a$ und $x_b$ zwei benachbarte Betriebspunkte eines Kennfeldes für eine Steuervariable $\theta$ ist, dann kann beispielsweise eine nichtsto-

$$\frac{|\theta_a-\theta_b|}{\|x_a-x_b\|_2} \leq k^{max}$$

chastische Nebenbedingung der Art                          mit der euklidischen Norm $\|\ \|_2$ formuliert werden, die den Gradienten zwischen den benachbarten Punkten des Kennfeldes mit einem Gradientengrenzwert $k^{max}$ beschränkt. Hierbei können über den Betriebsbereich B natürlich auch verschiedene Gradientengrenzwerte $k^{max}$ vorgegeben sein.

Zur Lösung des Optimierungsproblems kann beispielsweise für jede Realisierung des Belastungszyklus, also für jede Abfolge $T_m$ der Betriebspunkte $x_i$ (gegebenenfalls projiziert auf die Rasterpunkte $R_j$) die definierte Kostenfunktion $c(\theta,Z)$ für gegebene Steuervariablen $\theta$ auf einer Recheneinheit berechnet werden. Im Falle einer stochastischen Nebenbedingung mit einer zufallsbehafteten Beschränkung einer k-ten beschränkten Größe über den Belastungszyklus

$$\sum_{i=1..M} g_k\left(x_i,\theta_i,Z\right)\cdot w_{gki}$$

wird auch die k-te Beschränkung $B_k$ über den Belastungszyklus ermittelt, beispielsweise als

. Das führt zu einer Wahrscheinlichkeitsverteilung P(c) der Kostenfunktion $c(\theta,Z)$ zu der das vorgesehene Risikomaß $\rho$ ebenfalls auf einer Recheneinheit berechnet wird, entweder analytisch oder durch Approximation. In gleicher Weise ergibt sich gegebenenfalls auch die Wahrscheinlichkeitsverteilung der k-ten Beschränkung $B_k$, anhand der die Wahrscheinlichkeit W, dass die Beschränkung $B_k$ den Grenzwert $G_k$ überschreitet, ermittelt werden kann und die Einhaltung der Wahrscheinlichkeitsschranke Ws. Danach wird zur Optimierung die zumindest eine Steuervariable $\theta$ variiert (also verändert), gegebenenfalls unter Berücksichtigung von vorgegebenen nichtstochastischen Rand- und Nebenbedingungen und/oder stochastischen Nebenbedingungen, und dafür erneut das Risikomaß $\rho$ der sich ergebenden Wahrscheinlichkeitsverteilung P(X) ermittelt, bis das Risikomaß $\rho$ optimiert ist, in der Regel minimiert ist. Es wird damit nur eine neue Steuervariable $\theta$ für die nächste Iteration ausgewählt, die zu keiner Verletzung einer Rand- oder Nebenbedingung führt. Für die Optimierung kann ein geeignetes Abbruchkriterium vorgesehen sein, beispielsweise eine Anzahl von Iterationen oder ein definierter maximaler Unterschied zwischen den Risikomaßen $\rho$ zweier hintereinander folgender Iterationen. Auch der letzte Schritt erfolgt auf einer Recheneinheit mit entsprechender Software.

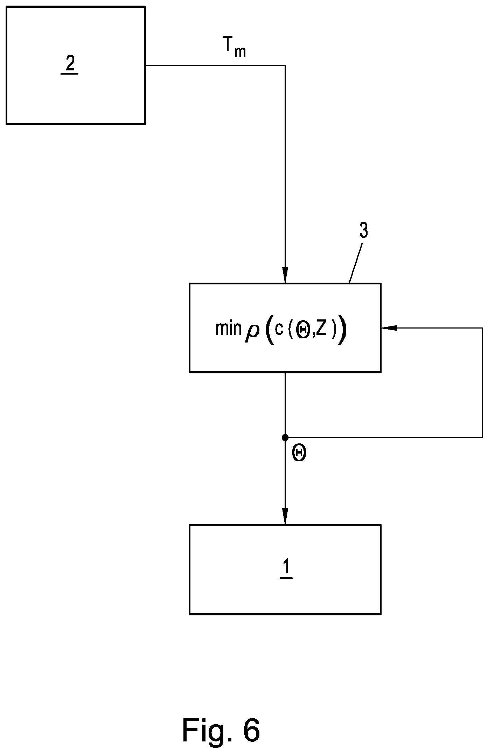

Das ist schematisch in Fig.6 anhand eines Ausführungsbeispiels dargestellt. In einer Simulationseinheit 2 wird das technische System für einen vorgegebenen Belastungszyklus mehrmals unter Berücksichtigung einer Zufallseinflussgröße Z simuliert, um die Abfolge $T_m$ der Betriebspunkte $x_i$ zu erhalten. Diese werden an eine Recheneinheit 3 übergeben, wobei die Simulationseinheit 2 und die Recheneinheit 3 auch auf einer gemeinsamen Hardware ausgeführt sein können. In der Recheneinheit 3 ist die Kalibrierung implementiert, die in jedem Iterationsschritt mit den jeweiligen Steuervariablen $\theta$ das Risikomaß $\rho$ berechnet und die Steuervariablen $\theta$ variiert, bis das Abbruchkriterium erreicht ist. Die letzten Steuervariablen $\theta$ werden dann als optimierte Steuervariablen $\theta_{opt}$ an das technische System 1 übergeben, um das technische System 1 damit zu regeln, zu steuern oder einzustellen.

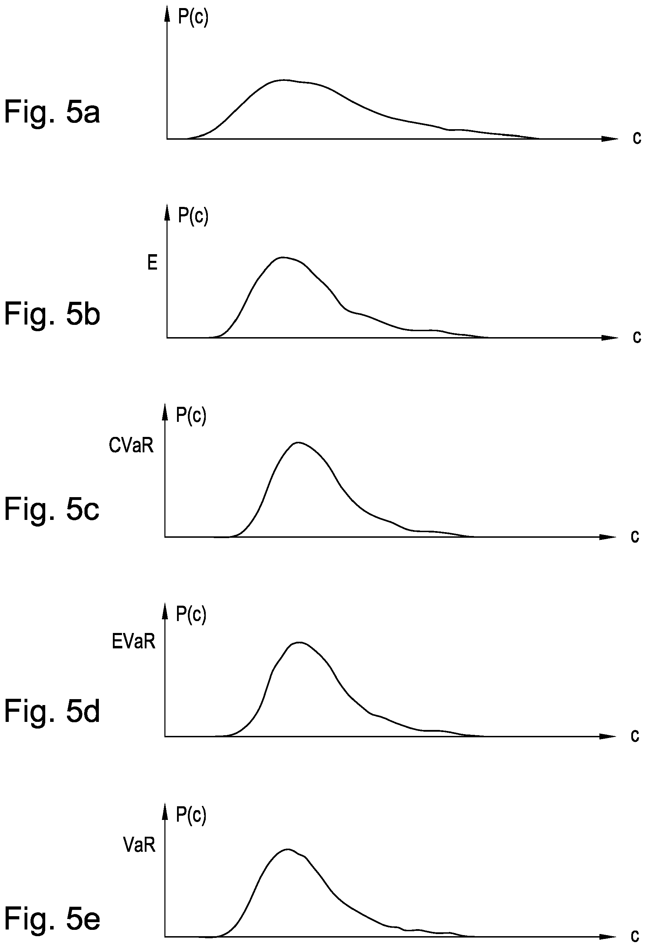

Das Ergebnis der erfindungsgemäßen Kalibrierung wird anhand der Fig.5 erläutert. Hierzu wurde zuerst eine Kalibrierung eines technischen Systems wie oben beschrieben durchgeführt. Die Kalibirierung erfolgt hinsichtlich der beispielhaft genannten verschiedenen Risikomaße p, also E, VaR, CVaR und EVaR. Jede Kalibrierung führte zu verschiedenen optimalen Steuervariablen $\theta$, mit denen das technische System betrieben wird. Um den Einfluss der verschiedenen Risikomaße $\rho$ zu veranschaulichen wurden eine Mehrzahl von weiteren Realisierungen des Belastungszyklus unter Berücksichtigung von Zufallseinflussgrößen Z und mit den jeweiligen optimalen Steuervariablen $\theta$ wie oben beschrieben erstellt. Es wurde damit praktisch der Belastungszyklus nochmals mehrmals unter Permutation verschiedener Größen (Zufallseinflussgröße Z) am technischen System durchgeführt. Zu jeder dazu ermittelten Abfolge T von Betriebspunkten $x_i$ wurde die Kostenfunktion $c(\theta,Z)$, die auch für die Kalibrierung verwendet wurde, mit den verschiedenen Steuervariablen $\theta$ berechnet. Das führte mit den neuen Realisierungen des Belastungszyklus für jeden Satz Steuervariablen $\theta$ (die anhand der verschiedenen Risikomaße $\rho$ berechnet wurden) zu einer Wahrscheinlichkeitsverteilung P(c). Diese Verteilungen sind in den Figuren 5 b) bis e) dargestellt. Als Vergleich wurde die Kalibrierung auch wie bisher üblich nur anhand einer einzigen Realisierung des Belastungszyklus durchgeführt. Auch dazu wurden die Steuervariablen $\theta$ für das technische System bestimmt. Auch für das derart kalibrierte technische System wurde die Kostenfunktion $c(\theta,Z)$ für die neuen Realisierungen des Belastungszyklus ermittelt, was zur Wahrscheinlichkeitsverteilung P(c) in Fig.5 a) führte.

Das erste das in Fig.5 auffällt sind die sich ergebenden unterschiedlichen Wahrscheinlichkeitsverteilungen. Die Wahrscheinlichkeitsverteilung P(c) in Fig.5 a) hat eine deutliche Größere Varianz und einen ausgeprägten rechten Ausläufer als die restlichen Wahrscheinlichkeitsverteilungen. Das bedeutet, dass die Kostenfunktion $c(\theta,Z)$ in einem wesentlichen weiteren Bereich variiert und dass auch mehr negative Ausreißer im rechten Ausläufer enthalten sind.

Im Falle des Erwartungswertes E als Risikomaß $\rho$ (Fig. 5 b)) hat sich die Masse der Wahrscheinlichkeitsverteilung P(c) der Kostenfunktion $c(\theta,Z)$ gegenüber der Verteilung nach Fig.5 a) nach links verschoben und die Wahrscheinlichkeitsverteilung P(c) hat den kleinsten Erwartungswert E (mittlerer Wert der Kostenfunktion $c(\theta,Z)$).

Das Ergebnis für den CVaR (Fig.5 c)) und den EVaR (Fig. 5 d)) sind in diesem Beispiel ähnlich und qualitativ fast gleichwertig. Es ist zu erkennen, dass die Masse der Werte der Kostenfunktion $c(\theta,Z)$ nach rechts verschoben wurde, dafür aber der rechte Ausläufer deutlich weniger ausgeprägt ist. Das bedeutet, dass mit diesem Risikomaß $\rho$ Steuervariablen $\theta$ gefunden wurden, die zu höheren mittleren Werten der Kostenfunktion $c(\theta,Z)$ führen, dafür aber zu kleineren Werten der Kostenfunktion $c(\theta,Z)$ im Bereich der negativsten Ausreißer (rechter Ausläufer). Damit wurden auch die negativen Ausreißer reduziert, sowohl in der Anzahl als auch in der Höhe der Werte der Ausreißer.

Das Ergebnis für VaR (Fig. 5 e)) liegt irgendwo zwischen dem Ergebnis für den Erwartungswert E und den Ergebnissen für CVaR und EVaR. Dabei ist der mittlere Wert der Kostenfunktion $c(\theta,Z)$ etwas geringer als bei CVaR und EVaR, dafür der rechte Ausläufer aber etwas ausgeprägter.

Das verdeutlicht auch, dass für eine erfindungsgemäße Kalibrierung das Risikomaß $\rho$ vorteilhafterweise gemäß den Anforderungen gewählt werden sollte. In Anwendungen, in denen bestimmte Begrenzungen tunlichst nicht überschritten werden sollen, ist der CVaR oder EVaR mit einem geeignet gewählten Konfidenzniveau $\alpha$ vorteilhaft, weil dann die Ausreißer beschränkt werden. Wenn hingegen die vereinzelte Überschreitung von Begrenzungen unproblematisch ist, dann kann als Risikomaß $\rho$ auch der Erwartungswert E gewählt werden.

Die Optimierung, oder Kalibirierung, kann auf einer geeigneten Recheneinheit (Hardware und Software) mit Kalibriersoftware durchgeführt werden, die die oben erläuterten Schritte ausführt. Die erfindungsgemäße Kalibrierung ist damit ein computerimplementiertes Verfahren, das auf zumindest einer Recheneinheit ausgeführt wird.

Die Anzahl der Realisierungen des Belastungszyklus (Abfolgen $T_m$) können vorab ermittelt werden. Diese müssen für die Kalibrierung somit nur einmal ermittelt werden, da für die durchzuführende Optimierung lediglich der Wert der Kostenfunktion $c(\theta,Z)$, und gegebenenfalls der Wert der k-ten Beschränkung $B_k$, beispielsweise als

$$\sum_{i=1..M} g_k\left(x_i, \theta_i, Z\right) \cdot w_{gki}$$

, über den Belastungszyklus, für diese Realisierungen und den geänderten Steuervariablen $\theta$ neu berechnet werden muss.

Wie oben erläutert kann in der Kostenfunktion $c(\theta,Z)$ zumindest ein Modell f, $g_k$ einer Ausgangsgröße des technischen Systems enthalten sein. Es kann nun auch vorgesehen sein, das Modell f, $g_k$ der Ausgangsgröße parallel zur Optimierung zu trainieren. Dazu kann vorgesehen sein das technische System mit den kalibrierten Steuervariablen $\theta$ auf einem Prüfstand zu betreiben und dabei Messdaten zu den Ausgangsgrößen zu erfassen. Mit diesen erfassten Ausgangsgrößen kann das Modell f, $g_k$ trainiert werden, um die Genauigkeit des Modells f, $g_k$ zu erhöhen. Mit dem

verbesserten Modell f, $g_k$ kann die Optimierung wiederholt werden, was wiederum zu verbesserten Kalibrierungsergebnissen führt. Damit erhält man mit der Zeit immer verlässlichere Modelle f, $g_k$ und in weitere Folge immer verlässlichere Optimierungsergebnisse für die Steuervariablen θ. Das Training des Modells f, $g_k$ muss aber nicht parallel zur Kalibrierung erfolgen, sondern kann auch getrennt davon durchgeführt werden.

**Patentansprüche**

1. Verfahren zur Kalibrierung eines technischen Systems (1), wobei bei der Kalibrierung die Werte einer Anzahl von Steuervariablen (θ) des technischen Systems (1), mit denen das technische System (1) gesteuert oder eingestellt wird, in bestimmten Betriebspunkten ($x_i$) des technischen Systems (1) ermittelt werden und die Kalibrierung anhand eines Belastungszyklus für das technische System (1), der eine Abfolge ($T_m$) einer Anzahl von Betriebspunkten ($x_i$) des technischen Systems (1) bewirkt, durchgeführt wird, **dadurch gekennzeichnet, dass** der Belastungszyklus unter dem Einfluss zumindest einer Zufallseinflussgröße (Z) mehrmals ausgeführt wird, wobei sich bei jeder Realisierung des Belastungszyklus eine zufällige Abfolge ($T_m$) der Anzahl i von Betriebspunkten ($x_i$) ergibt, wobei jeder Betriebspunkt (xi) durch j=1...J Zustandsvariablen ($ZV_j$) des technischen Systems (1), die sich in Abhängigkeit von vorgegebenen Anfangssteuervariablen für die Steuervariablen (θ) des technischen Systems (1) einstellen, charakterisiert wird, **dass** eine Kostenfunktion c(θ,Z) definiert wird, die eine Zielfunktion y mit einem Modell f für eine Ausgangsgröße des technischen Systems (1) enthält, wobei das Modell f abhängig von der Anzahl der Steuervariablen (θ) des technischen Systems (1) und von der Anzahl i der zufälligen Betriebspunkte ($x_i$) des technischen Systems ist, sodass der Wert der Kostenfunktion c(θ,Z), der für jede Realisierung des Belastungszyklus für gegebene Steuervariablen (θ) auf einer Recheneinheit berechnet wird, selbst eine Zufallsvariable ist, die eine Wahrscheinlichkeitsverteilung P(c(θ,Z)) aufweist, **wobei** ein Risikomaß ρ der Wahrscheinlichkeitsverteilung P(c(θ,Z)) der Kostenfunktion c(θ,Z) definiert wird, mit dem die Wahrscheinlichkeitsverteilung P(c(θ,Z)) der Kostenfunktion c(θ,Z) auf eine skalare Größe abgebildet wird, **und wobei** das Risikomaß ρ durch Variation der Anzahl von Steuervariablen (θ) auf einer Recheneinheit optimiert wird, um die optimalen Steuervariablen ($θ_{opt}$) zur Kalibrierung zu erhalten, mit denen das technische System (1) gesteuert oder eingestellt wird.

2. Verfahren nach Anspruch 1, **dadurch gekennzeichnet, dass** der Betrieb des technischen Systems (1) für den Belastungszyklus unter dem Einfluss der zumindest einen Zufallseinflussgröße (Z) mehrmals simuliert wird, um die zufälligen Abfolgen ($T_m$) der Anzahl i der Betriebspunkte ($x_i$) zu erhalten und die j=1...J Zustandsvariablen ($ZV_j$) des technischen Systems (1) zu bestimmten Zeitpunkten während der Durchführung der Belastungszyklen aus der Simulation geliefert werden.

3. Verfahren nach Anspruch 1, **dadurch gekennzeichnet, dass** das technische System (1) für den Belastungszyklus unter dem Einfluss der zumindest einen Zufallseinflussgröße (Z) mehrmals betrieben wird, um die zufälligen Abfolgen ($T_m$) der Anzahl i der Betriebspunkte ($x_i$) zu erhalten und die j=1...J Zustandsvariablen ($ZV_j$) des technischen Systems (1) zu bestimmten Zeitpunkten während der Durchführung der Belastungszyklen erfasst werden.

4. Verfahren nach einem der Ansprüche 1 bis 3, **dadurch gekennzeichnet, dass** ein Modellwert des Modells f in der Zielfunktion y mit einem vorgegebenen Gewicht $w_{fi}$ und/oder mit vorgegebenen Kosten $c_f$ gewichtet wird.

5. Verfahren nach einem der Ansprüche 1 bis 3, **dadurch gekennzeichnet, dass** in der Kostenfunktion c(θ,Z) zumindest eine Beschränkung $B_k$ mit einem Modell $g_k$ für eine Ausgangsgröße des technischen Systems (1) berücksichtigt wird, wobei das Modell $g_k$ abhängig von der Anzahl der Steuervariablen (θ) des technischen Systems (1) und von der Anzahl i der zufälligen Betriebspunkte ($x_i$) des technischen Systems (1) ist.

6. Verfahren nach Anspruch 5 **dadurch gekennzeichnet, dass** ein Modellwert des Modells $g_k$ der zumindest einen Beschränkungen $B_k$ mit einem vorgegebenen Gewicht $w_{gk}$ und/oder mit vorgegebenen Kosten $c_{gk}$ gewichtet wird.

7. Verfahren nach Anspruch 5 oder 6, **dadurch gekennzeichnet, dass** eine Verletzung einer Beschränkung $B_k$ mit einer vorgegebenen Straffunktion φ bewertet wird.

8. Verfahren nach einem der Ansprüche 1 bis 7, **dadurch gekennzeichnet, dass** bei der Optimierung eine stochastische Nebenbedingung für zumindest eine Beschränkung $B_k$ mit einem Modell $g_k$ für eine Ausgangsgröße des technischen Systems (1) berücksichtigt, wobei das Modell $g_k$ abhängig von der Anzahl der Steuervariablen (θ) des technischen Systems (1) und von der Anzahl i der zufälligen Betriebspunkte ($x_i$) des technischen Systems (1) ist.

9.  Verfahren nach Anspruch 8, **dadurch gekennzeichnet, dass** mit der stochastischen Nebenbedingung geprüft wird, ob die Wahrscheinlichkeit W, dass die zumindest eine Beschränkung $B_k$ einen vorgegebenen Grenzwert $G_k$ überschreitet, eine vorgegebene Wahrscheinlichkeitsschranke $W_S$ verletzt.

10. Verfahren nach einem der Ansprüche 1 bis 9, **dadurch gekennzeichnet, dass** zur Optimierung iterativ die Anzahl der Steuervariablen ($\theta$) variiert wird und dabei die Wahrscheinlichkeitsverteilung $P(c(\theta,Z))$ der Kostenfunktion $c(\theta, Z)$ erneut ermittelt wird, bis das Risikomaß $\rho$ der Wahrscheinlichkeitsverteilung $P(c(\theta,Z))$ optimiert ist.

11. Verfahren nach einem der Ansprüche 1 bis 10, **dadurch gekennzeichnet, dass** bei der Optimierung eine nichtstochastische Randbedingung und/oder Nebenbedingung für die Anzahl der Steuervariablen ($\theta$) berücksichtigt wird.


**Claims**

1.  Method for calibrating a technical system (1), wherein, during the calibration, the values of a number of control variables ($\theta$) of the technical system (1), with which the technical system (1) is controlled or tuned, are determined at specific operating points ($x_i$) of the technical system (1) and the calibration is carried out on the basis of a load cycle for the technical system (1) which results in a sequence ($T_m$) of a number of operating points ($x_i$) of the technical system (1), **characterized in that** the load cycle is executed multiple times under the influence of at least one random influencing variable (Z), with each realization of the load cycle resulting in a random sequence ($T_m$) of the number i of operating points ($x_i$), whereas each operating point ($x_i$) is **characterized by** j=1...J state variables (ZVj) of the technical system (1), that ensue depending on given initial control variables for the control variables ($\theta$) of the technical system (1), **in that** a cost function $c(\theta,Z)$ is defined which contains a target function y with a model f for an output variable of the technical system (1), the model f being dependent on the number of control variables ($\theta$) of the technical system (1) and on the number i of random operating points ($x_i$) of the technical system so that the value of the cost function $c(\theta,Z)$, that is calculated for each realization of the load cycle for given control variables ($\theta$) on a computing unit, is itself a random variable that has a probability distribution $P(c(\theta,Z))$, **whereas** a risk measure $\rho$ of the probability distribution $P(c(\theta,Z))$ of the cost function $c(\theta,Z)$ is defined, with which the probability distribution $P(c(\theta,Z))$ of the cost function $c(\theta,Z)$ is mapped to a scalar variable, **and whereas** the risk measure $\rho$ is optimized on a computing unit by varying the number of control variables ($\theta$) in order to obtain the optimal control variables ($\theta_{opt}$) for calibration, with which the technical system (1) is controlled or tuned.

2.  Method according to claim 1, **characterized in that** the operation of the technical system (1) is simulated multiple times for the load cycle under the influence of the at least one random influencing variable (Z) in order to obtain the random sequences ($T_m$) of the number i of operating points ($x_i$) and the j=1...J state variables (ZVj) of the technical system (1) are supplied from the simulation at predetermined times during execution of the load cycle.

3.  Method according to claim 1, **characterized in that** the technical system (1) is operated multiple times for the load cycle under the influence of the at least one random influencing variable (Z) in order to obtain the random sequences ($T_m$) of the number i of operating points ($x_i$) and the j=1...J state variables (ZVj) of the technical system (1) are recorded at predetermined times during execution of the load cycle.

4.  Method according to any of claims 1 to 3, **characterized in that** a model value of the model f in the target function y is weighted with a predetermined weighting $w_{fi}$ and/or with predetermined costs $c_f$.

5.  Method according to any of claims 1 to 3, **characterized in that** at least one restriction $B_k$ with a model $g_k$ for an output variable of the technical system (1) is taken into account in the cost function $c(\theta,Z)$, the model $g_k$ being dependent on the number of control variables ($\theta$) of the technical system (1) and on the number i of random operating points ($x_i$) of the technical system (1).

6.  Method according to claim 5, **characterized in that** a model value of the model $g_k$ of the at least one restriction $B_k$ is weighted with a predetermined weight $w_{gk}$ and/or with predetermined costs $c_{gk}$.

7.  Method according to either claim 5 or 6, **characterized in that** a violation of a restriction $B_k$ is evaluated with a predetermined penalty function $\varphi$.

8.  Method according to any of claims 1 to 7, **characterized in that** a stochastic constraint for at least one restriction $B_k$ with a model $g_k$ for an output variable of the technical system (1) is taken into account in the optimization, the

model $g_k$ being dependent on the number of control variables ($\theta$) of the technical system (1) and on the number i of random operating points ($x_i$) of the technical system (1).

9. Method according to claim 8, **characterized in that** the stochastic constraint is used to check whether the probability W that the at least one restriction $B_k$ exceeds a predetermined limit value $G_k$ violates a predetermined probability bound $W_S$.

10. Method according to any of claims 1 to 9, **characterized in that** the number of control variables ($\theta$) is varied iteratively for optimization and the probability distribution $P(c(\theta,Z))$ of the cost function $c(\theta,Z)$ is determined again until the risk measure $\rho$ of the probability distribution $P(c(\theta,Z))$ is optimized.

11. Method according to any of claims 1 to 10, **characterized in that** a non-stochastic boundary condition and/or constraint for the number of control variables ($\theta$) is taken into account in the optimization.

**Revendications**

1. Procédé permettant l'étalonnage d'un système technique (1), dans lequel, lors de l'étalonnage, les valeurs d'un certain nombre de variables de commande ($\theta$) du système technique (1), avec lesquelles le système technique (1) est commandé ou réglé, sont déterminées à des points de fonctionnement ($x_i$) définis du système technique (1) et l'étalonnage est effectué au moyen d'un cycle de charge pour le système technique (1), lequel cycle de charge provoque une séquence ($T_m$) d'un certain nombre de points de fonctionnement ($x_i$) du système technique (1), **caractérisé en ce que** le cycle de charge est exécuté plusieurs fois sous l'influence d'au moins une grandeur d'influence aléatoire (Z), dans lequel une séquence ($T_m$) aléatoire du nombre i de points de fonctionnement ($x_i$) résulte de chaque réalisation du cycle de charge, dans lequel chaque point de fonctionnement ($x_i$) est **caractérisé par** j = 1...J variables d'état (ZVj) du système technique (1) qui se règlent en fonction de variables de commande initiales prédéfinies pour les variables de commande ($\theta$) du système technique (1), **en ce qu'**une fonction de coût $c(\theta,Z)$ est définie, laquelle contient une fonction cible y comportant un modèle f pour une grandeur de sortie du système technique (1), dans lequel le modèle f dépend du nombre de variables de commande ($\theta$) du système technique (1) et du nombre i de points de fonctionnement ($x_i$) aléatoires du système technique, de sorte que la valeur de la fonction de coût $c(\theta,Z)$, laquelle valeur est calculée sur une unité de calcul pour chaque réalisation du cycle de charge pour des variables de commande ($\theta$) données, est elle-même une variable aléatoire qui présente une distribution de probabilité $P(c(\theta,Z))$, dans lequel une mesure de risque $\rho$ de la distribution de probabilité $P(c(\theta, Z))$ de la fonction de coût $c(\theta,Z)$ est définie, avec laquelle mesure de risque la distribution de probabilité $P(c(\theta,Z))$ de la fonction de coût $c(\theta,Z)$ est représentée sur une grandeur scalaire, et dans lequel la mesure de risque $\rho$ est optimisée en faisant varier le nombre de variables de commande ($\theta$) sur une unité de calcul afin d'obtenir les variables de commande optimales ($\theta_{opt}$) pour l'étalonnage, avec lesquelles le système technique (1) est commandé ou réglé.

2. Procédé selon la revendication 1, **caractérisé en ce que** le fonctionnement du système technique (1) est simulé plusieurs fois pour le cycle de charge sous l'influence de l'au moins une grandeur d'influence aléatoire (Z) afin d'obtenir les séquences ($T_m$) aléatoires du nombre i de points de fonctionnement ($x_i$) et les j = 1...J variables d'état (ZVj) du système technique (1) sont fournies à partir de la simulation à des instants définis pendant l'exécution des cycles de charge.

3. Procédé selon la revendication 1, **caractérisé en ce que** le système technique (1) fonctionne plusieurs fois pour le cycle de charge sous l'influence de l'au moins une grandeur d'influence aléatoire (Z) afin d'obtenir les séquences ($T_m$) aléatoires du nombre i de points de fonctionnement ($x_i$) et les j = 1...J variables d'état (ZVj) du système technique (1) sont détectées à des instants définis pendant l'exécution des cycles de charge.

4. Procédé selon l'une des revendications 1 à 3, **caractérisé en ce qu'**une valeur de modèle du modèle f dans la fonction cible y est pondérée avec un poids $w_{fi}$ prédéfini et/ou avec un coût $c_f$ prédéfini.

5. Procédé selon l'une des revendications 1 à 3, **caractérisé en ce que,** dans la fonction de coût $c(\theta,Z)$, au moins une limitation $B_k$ comportant un modèle $g_k$ est prise en compte pour une grandeur de sortie du système technique (1), dans lequel le modèle $g_k$ dépend du nombre de variables de commande ($\theta$) du système technique (1) et du nombre i de points de fonctionnement ($x_i$) aléatoires du système technique (1).

6. Procédé selon la revendication 5, **caractérisé en ce qu'**une valeur de modèle du modèle $g_k$ de l'au moins une

limitation $B_k$ est pondérée avec un poids $w_{gk}$ prédéfini et/ou avec un coût $c_{gk}$ prédéfini.

7. Procédé selon la revendication 5 ou 6, **caractérisé en ce qu'**une infraction d'une limitation $B_k$ est évaluée avec une fonction de pénalité $\varphi$ prédéfinie.

8. Procédé selon l'une des revendications 1 à 7, **caractérisé en ce que,** lors de l'optimisation, une condition secondaire stochastique pour au moins une limitation $B_k$ comportant un modèle $g_k$ prend en compte pour une grandeur de sortie du système technique (1), dans lequel le modèle $g_k$ dépend du nombre de variables de commande ($\theta$) du système technique (1) et du nombre $i$ de points de fonctionnement ($x_i$) aléatoires du système technique (1).

9. Procédé selon la revendication 8, **caractérisé en ce qu'**on vérifie avec la condition secondaire stochastique si la probabilité $W$ selon laquelle l'au moins une limitation $B_k$ dépasse une valeur limite $G_k$ prédéfinie enfreint une limite de probabilité $W_s$ prédéfinie.

10. Procédé selon l'une des revendications 1 à 9, **caractérisé en ce que,** pour l'optimisation, on fait varier de manière itérative le nombre de variables de commande ($\theta$) et on détermine ainsi de nouveau la distribution de probabilité $P(c(\theta, Z))$ de la fonction de coût $c(\theta, Z)$ jusqu'à ce que la mesure de risque $\rho$ de la distribution de probabilité $P(c(\theta, Z))$ soit optimisée.

11. Procédé selon l'une des revendications 1 à 10, **caractérisé en ce que,** lors de l'optimisation, une condition marginale et/ou une condition secondaire non stochastiques sont prises en compte pour le nombre de variables de commande ($\theta$).

Fig. 1

Fig. 2

Fig. 3

Fig. 4

P(c)

Fig. 5a

c

P(c)

E

Fig. 5b

c

P(c)

CVaR

Fig. 5c

c

P(c)

EVaR

Fig. 5d

c

P(c)

VaR

Fig. 5e

c

$$\min \rho \big( c(\Theta, Z) \big)$$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016146528 A1
- DE 102015207252 A1
- EP 1703110 A1